# EUROPÄISCHE PATENTSCHRIFT

(11) **EP 3 480 996 B1**
(45) Veröffentlichungstag und Bekanntmachung des Hinweises auf die Patenterteilung: **15.07.2020**
(21) Anmeldenummer: 17200280.0
(22) Anmeldetag: 07.11.2017
(51) Int. Cl.: H04L 5/14, H04L 5/00

(54) **VERFAHREN ZUM AUFBAU EINER DUPLEX-VERBINDUNG IN EINEM KOMMUNIKATIONSSYSTEM**
METHOD FOR ESTABLISHING A DUPLEX CONNECTION IN A COMMUNICATION SYSTEM
PROCÉDÉ D'ÉTABLISSEMENT D'UNE CONNEXION DUPLEX DANS UN SYSTÈME DE COMMUNICATION

(43) Veröffentlichungstag der Anmeldung: 08.05.2019
(73) Patentinhaber: Siemens Aktiengesellschaft, 80333 München (DE)
(72) Erfinder: Brunner, Martin, 1120 Wien (AT); Frankenberg, Robert, 1210 Wien (AT); Kussyk, Jaroslaw, 1170 Wien (AT)
(74) Vertreter: Maier, Daniel Oliver

(56) Entgegenhaltungen:
- EP-A2- 1 059 773
- US-A- 5 103 446
- US-B2- 7 313 163

## Beschreibung

### Technisches Gebiet

Die vorliegende Erfindung betrifft ein Verfahren zum Aufbau einer Duplex-Verbindung zur Datenübertragung zwischen zwei Übertragungseinheiten in einem Kommunikationssystem. Dabei weisen die zwei Übertragungseinheiten jeweils eine Sendeeinheit und eine Empfangseinheit auf. Die Duplex-Verbindung besteht aus zumindest zwei entgegengesetzt gerichteten, unidirektionalen Übertragungskanälen, über welche jeweils eine Kommunikationsverbindung zur Datenübertragung zwischen der jeweiligen Sendeeinheit und der jeweiligen Empfangseinheit der zwei Übertragungseinheiten aufgebaut wird.

### Stand der Technik

In der Nachrichten- und Kommunikationstechnik wird eine Infrastruktur zum Übermitteln von Informationen üblicherweise als Kommunikationssystem bezeichnet. Zum Austausch bzw. zum Übermitteln der Informationen und/oder Daten z.B. in Form eines Bitstroms, etc. kann im Kommunikationssystem über ein Übertragungsmedium (z.B. Kabel, Funk, Stromleitung, etc.) eine Kommunikationsverbindung aufgebaut werden, über welche Informationen bzw. Daten zwischen zumindest zwei Übertragungseinheiten ausgetauscht werden. Dabei kann eine Übertragungseinheit beispielsweise als Sender und eine weitere Übertragungseinheit als Empfänger fungieren, wobei die Daten vom Sender zum Empfänger übertragen werden. Eine Übertragungseinheit kann allerdings auch sowohl eine Sendeeinheit bzw. einen Sender und eine Empfangseinheit bzw. Empfänger aufweisen, um Daten sowohl senden als auch empfangen zu können.

Zum Austausch von Informationen (z.B. Sprache, Daten, etc.) werden heutzutage in vielen Kommunikationsnetzen bzw. Kommunikationssystemen, insbesondere in Telefon-, Daten- und Funknetzen, so genannte Duplex-Verbindungen eingesetzt. Duplex-Verbindungen können allerdings auch bei der so genannten Trägerfrequenz-Nachrichtenübertragung über Hoch- und/oder Mittelspannungsleitungen bzw. TFH-Kommunikation genutzt werden. Dabei werden beispielsweise vorhandene, elektrische Leitungen, insbesondere Freileitungen, von Hoch- und/oder Mittelspannungsnetzen als Übertragungsmedium für einen Austausch von Informationen bzw. Daten zwischen Übertragungseinheiten verwendet. Für den Austausch von Informationen bzw. den Datenaustausch werden z.B. Trägerfrequenzanlagen in einem Frequenzbereich zwischen 30kHz und 500 kHz bzw. in manchen Regionen auch bis zu einigen MHz eingesetzt.

Der Begriff "Duplex" bezeichnet in der Kommunikationstechnik ein Kommunikationsverfahren, bei welchem zwei Übertragungseinheiten mit einer Sendeeinheit bzw. einem Sender und einer Empfangseinheit bzw. einem Empfänger in beide Richtungen Informationen und/oder Daten austauschen können. Diese Übertragungseinheiten sind über ein Übertragungsmedium wie z.B. Kabel, Stromleitung, Funk, etc. verbunden, wobei als Übertragungsweg vom Sender zum Empfänger für die Kommunikationsverbindung zumindest ein Übertragungskanal genutzt wird.

Bei den Duplex-Verbindungen werden so genannte Halb-Duplex- und so genannte Voll-Duplex-Verbindungen unterschieden. Bei einer Halb-Duplex-Verbindung können Informationen/Daten zwar abwechselnd, aber nicht zeitgleich zwischen den Übertragungseinheiten ausgetauscht werden. Bei einer Voll-Duplex-Verbindung werden Informationen/Daten zwischen den Übertragungseinheiten in beide Richtungen zeitgleich übertragen. Dazu kann die Voll-Duplex-Verbindung beispielsweise aus zwei entgegengesetzt gerichteten, unidirektionalen Übertragungskanälen bestehen. Das bedeutet, dass z.B. ein erster unidirektionaler Übertragungskanal für den Datenaustausch zwischen dem Sender einer ersten Übertragungseinheit und dem Empfänger einer zweiten Übertragungseinheit genutzt wird, und dass ein zweiter unidirektionaler Übertragungskanal für den Datenaustausch zwischen dem Sender der zweiten Übertragungseinheit und dem Empfänger der ersten Übertragungseinheit verwendet wird. Zum Generieren der beiden entgegengesetzt gerichteten, unidirektionalen Übertragungskanäle bei Verwendung desselben physikalischen Übertragungsmediums (z.B. Funkschnittstelle, Kabel, Stromleitung, etc.) können unterschiedliche so genannte Duplexing-Methoden bzw. Duplex-Verfahren eingesetzt werden.

Eine Möglichkeit stellt das so genannte Zeitduplex- oder Time-Division-Duplex-(TDD)-Verfahren dar. Beim TDD-Verfahren werden von den beiden unidirektionalen Übertragungskanälen zwar dieselben Frequenzen genutzt, allerdings sind diese zeitlich voneinander getrennt. Das bedeutet, beim TDD-Verfahren wird nur ein Frequenzband benutzt, wobei sich die beiden Übertragungseinheiten bei der Benutzung abwechseln. Ein weitere Duplex-Verfahren ist das so genannte Frequenzduplex- oder Frequency-Division-Duplex-(FDD)-Verfahren. Dabei werden die Informationen/Daten zwischen den beiden Übertragungseinheiten mittels für jede Richtung unterschiedlichen Trägerfrequenzen übertragen. D.h. für jede Übertragungsrichtung wird ein eigenes Frequenzband genutzt. Ein weiteres Duplex-Verfahren ist z.B. das so genannte Code-Duplex- oder Code-Division-Duplex-(CDD)-Verfahren, bei welchen die Informationen für jede Richtung durch unterschiedliche Spreizcodes kodiert und so zur selben Zeit auf den gleichen Frequenzen übertragen werden. Weiterhin können die Duplex-Verfahren auch kombiniert werden - so wird beispielsweise im Mobilfunkbereich eine Kombination aus TDD- und FDD-Verfahren eingesetzt.

Zum Aufbau von Kommunikationsverbindungen ist es außerdem wichtig, dass empfängerseitig ein Raster wiedererkannt wird, in welchem die von der Sendeeinheit der jeweiligen Übertragungseinheiten ausgesandten Informationen/Daten ankommen. Das bedeutet, dass von der Empfangseinheit der jeweiligen Übertragungseinheit eine Taktfrequenz erkannt werden muss, mit welcher die Daten- bzw. Informationseinheiten von der Sendeeinheit der jeweils anderen Übertragungseinheit ausgesendet werden. Dieses Erkennen und Abstimmen auf die Taktfrequenz des jeweiligen Senders durch die jeweilige Empfangseinheit wird auch als Synchronisation bezeichnet. Wird dann von Sende- und Empfangseinheit die gleiche Taktfrequenz verwendet, so verarbeiten Sender und Empfänger die zu übertragenden bzw. zu empfangenden Informationseinheiten und/oder Signale synchron oder quasisynchron zueinander (d.h. mit einer zulässigen Abweichung in der Synchronität). Da im Regelfall eine Periode der zu übertragenden Informationseinheiten bzw. Signale bekannt ist, kann sich die Synchronisation der jeweiligen Empfangseinheit beispielsweise darauf beschränken, einen Anfangszeitpunkt oder bei Mehrträgersignalübertragung eine Anfangsphase z.B. einer Informations- oder Datenübertragung zu erkennen.

Für eine Synchronisation einzelner unidirektionaler Verbindungen zwischen Sende- und Empfangseinheiten werden in der Nachrichtentechnik vor einer Datenübertragung spezielle Signale wie z.B. eine Folge von Pilottönen und/oder vorher bekannten Informationseinheiten oder so genannte Chirp-Signale genutzt. Diese speziellen Signale werden als Präambel, deren Form bzw. Abfolge der Empfangseinheit bekannt ist, vor einer Informationsübertragung, etc. von der Sendeeinheit ausgesendet und für die Synchronisation zwischen Sende- und Empfangseinheit eingesetzt.

Bei einer Duplex-Verbindung zwischen zwei Übertragungseinheiten, welche aus zwei unidirektionalen Übertragungskanälen bzw. Kommunikationsverbindungen besteht, ist es allerdings notwendig, für beide entgegengesetzt gerichteten Kommunikationsverbindungen eine Synchronisation der jeweiligen Empfangseinheit mit der jeweiligen Sendeeinheit durchzuführen. Weiterhin ist es wichtig, dass die beiden unidirektionalen Kommunikationsverbindungen aufeinander abgestimmt aufgebaut werden, insbesondere da die entgegengesetzt gerichteten, unidirektionalen Übertragungskanäle bzw. Verbindungen der Duplex-Verbindung zwischen den Übertragungseinheiten wechselseitig eine Rückmeldekanal enthalten können, um beispielsweise eine Anpassung an den jeweiligen Übertragungskanal zu ermöglichen. Ein Aufbau einer Duplex-Verbindung zwischen zwei Übertragungseinheiten kann daher beispielsweise nach dem so genannten Master-Slave-Prinzip erfolgen. Dabei wird beispielsweise die eine Übertragungseinheit als Master und die andere Übertragungseinheit als Slave konfiguriert. Der Aufbau der Duplex-Verbindung wird dann z.B. von der als Master konfigurierten Übertragungseinheit gesteuert. Diese Vorgehensweise weist allerdings den Nachteil auf, dass insbesondere bei einer In-Betrieb-Setzung ein erhöhter Aufwand notwendig ist, vor allem um die Übertragungseinheiten entsprechend zu konfigurieren. Weiterhin kann es durch den einseitig gesteuerten Verbindungsaufbau (d.h. der Verbindungsaufbau wird durch die Master-Übertragungseinheit initiiert und gesteuert) zeitlich länger dauern, bis die Duplex-Verbindung aufgebaut ist. Weiterhin können während der Synchronisation keinen Zustandsinformationen in Bezug auf die jeweilige Übertragungseinheit und/oder einen Zustand des Verbindungsaufbaus übertragen werden. Derartige Informationen können beispielsweise erst nach erfolgter Synchronisation bzw. während der regulären Datenübertragungsphase mittels spezieller Datagramme übermittelt werden. Veröffentlichungen US 5,103,446 A, US 7,313,163 B2 und EP 1 059 773 A2 stellen einen Teil des relevanten Stands der Technik dar.

### Darstellung der Erfindung

Der Erfindung liegt daher die Aufgabe zugrunde, ein Verfahren zum Aufbau einer Duplexverbindung mit zumindest zwei entgegengesetzt gerichteten, unidirektionalen Übertragungskanälen zwischen zwei Übertragungseinheiten in einem Kommunikationssystems anzugeben, mit welchem ohne zusätzlichen Aufwand rasch eine Synchronisation der Empfangseinheiten der Übertragungseinheiten sowie eine koordinierter Aufbau der beiden Kommunikationsverbindungen bzw. Übertragungskanäle ermöglicht wird und bei welchem vor einer Synchronisation der jeweiligen Empfangseinheit zusätzlich eine Information zur Synchronisation an die jeweilige Übertragungseinheit übertragen werden kann.

Diese Aufgabe wird durch ein Verfahren der eingangs genannten Art mit den Merkmalen gemäß dem unabhängigen Patentanspruch gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren zum Aufbau einer Duplex-Verbindung zur Datenübertragung zwischen zwei Übertragungseinheiten. Jede der zwei Übertragungseinheiten weist dazu eine Sendeeinheit bzw. einen Sender und eine Empfangseinheit bzw. einen Empfänger auf. Die Duplex-Verbindung besteht aus zwei entgegengesetzt gerichteten, unidirektionalen Übertragungskanälen, über welche jeweils eine Kommunikationsverbindung zur Datenübertragung zwischen der jeweiligen Sendeeinheit und der jeweiligen Empfangseinheit der zwei Übertragungseinheiten aufgebaut wird. Während einer Synchronisationsphase wird unabhängig voneinander von den Sendeeinheiten der zwei Übertragungseinheiten ein jeweils erstes Synchronisationssignal periodisch wiederholt ausgesendet. Nach einer Detektion und Synchronisation mit dem jeweiligen ersten Synchronisationssignal durch die jeweilige Empfangseinheit wird die jeweils zur selben Übertragungseinheit gehörende Sendeeinheit angewiesen, anstatt des jeweiligen ersten Synchronisationssignals zumindest einmalig ein jeweils zweites Synchronisationssignal auszusenden. Nach zumindest einmaliger Detektion des jeweils zweiten Synchronisationssignals durch die Empfangseinheiten der zwei Übertragungseinheiten wird dann eine Umstellung auf eine Übertragung von Informationseinheiten bzw. Daten durchgeführt.

Der Hauptaspekt der erfindungsgemäß vorgeschlagenen Lösung besteht darin, dass dadurch ein robuster und insbesondere ein schneller Aufbau einer Duplexverbindung mit zwei entgegengesetzt gerichteten, unidirektionalen Übertragungskanälen zwischen zwei Übertragungseinheiten möglich ist. Das wird insbesondere durch eine Übertragung von Informationen über die beiden Übertragungseinheiten bzw. einen jeweiligen Zustand der Synchronisation erzielt. Diese Zustandsinformation über einen jeweiligen Synchronisationsstatus in der jeweiligen Übertragungseinheit wird während der Synchronisationsphase - d.h. noch vor einer regulären Datenübertragung - durch das Aussenden von zwei unterschiedlichen Synchronisationssignalen je Sendeeinheit bzw. durch einen Wechsel von einem ersten auf ein zweites Synchronisationssignal der jeweils anderen Übertragungseinheit übermittelt.

Für den Aufbau der Duplex-Verbindung durch das erfindungsgemäße Verfahren sind die beiden Übertragungseinheiten gleichberechtigt, wodurch ein Konfigurationsaufwand gering gehalten werden kann. Weiterhin ermöglicht das erfindungsgemäße Verfahren einen parallelen Aufbau der Kommunikationsverbindungen der Duplex-Verbindung bzw. eine parallele Synchronisation der jeweiligen Kommunikationsverbindung. Damit kann die Duplex-Verbindung zwischen den beiden Übertragungseinheiten relativ rasch und koordiniert aufgebaut werden.

Es ist vorteilhaft, wenn das jeweils zweite Synchronisationssignal aus dem jeweils ersten Synchronisationssignal der Sendeeinheit der jeweiligen Übertragungseinheit abgeleitet wird. Das zweite Synchronisationssignal kann aus dem ersten Synchronisationssignal beispielsweise durch Modulation der Wiederholungsperiode des ersten Synchronisationssignals abgeleitet werden. Dazu kann eine Wiederholungsperiode des zweiten Synchronisationssignals z.B. durch Einfügen von Pausen gegenüber der Wiederholungsperiode des ersten Synchronisationssignals verlängert werden. Alternativ kann das zweite Synchronisationssignal auch durch Veränderung einer Amplitude und/oder einer Polarität des ersten Synchronisationssignals senderseitig erzeugt werden. Das erste Synchronisationssignal wird dabei idealerweise nach einem Verfahren zur Synchronisation von Sende- und Empfangseinheiten bei Mehrträgersignalübertragung generiert, welches aus der bisher unveröffentlichten europäischen Patentanmeldung EP 17200243.8 bekannt ist.

Idealerweise wird in jeder der zwei Übertragungseinheiten eine Steuereinheit vorgesehen, durch welche die Datenübertragung überwacht und die Synchronisationsphase initiiert wird. Durch die Steuereinheiten kann auf sehr einfache Weise z.B. nach einem Hochfahren von zumindest einer der zwei Übertragungseinheiten oder im Fall einer Kommunikationsstörung während einer Datenübertragung die Synchronisationsphase veranlasst werden.

Weiterhin kann die Steuereinheit der jeweiligen Übertragungseinheit in vorteilhafter Weise dazu genutzt werden, dass die Sendeeinheit der jeweiligen Übertragungseinheit über die Detektion und Synchronisation der zur selben Übertragungseinheit gehörenden Empfangseinheit informiert wird und ein Wechsel vom ersten zum zweiten Synchronisationssignal veranlasst wird. Dabei ist es günstig, wenn die Detektion und Synchronisation mit dem jeweils ersten Synchronisationssignal von der jeweiligen Empfangseinheit der zur selben Übertragungseinheit gehörenden Steuereinheit signalisiert wird. Von dieser Steuereinheit kann dann die zur selben Übertragungseinheit gehörende Sendeeinheit zum Aussenden des jeweils zweiten Synchronisationssignals angewiesen werden.

Eine zweckmäßige Ausgestaltung des erfindungsgemäßen Verfahrens sieht vor, dass die Synchronisationsphase nach einem Starten der zwei Übertragungseinheiten und/oder durch eine Empfangs- bzw. Kommunikationsstörung während einer Datenübertragung initiiert wird. Empfangs- bzw. Kommunikationsstörungen können auf der jeweiligen Empfängerseite in vorteilhafter Weise mittels einer Metrik für eine Empfangsqualität festgestellt werden. Als derartige Metriken können beispielsweise die zyklische Redundanzprüfung bzw. der so genannte Cyclic Redundancy Check (CRC) oder eine erhöhte Bitfehlerrate und/oder Blockfehlerrate oder ein erhöhtes Bitfehlerverhältnis und/oder Blockfehlerverhältnis herangezogen werden. Bei der zyklischen Redundanzprüfung wird ein Prüfwert für Daten bestimmt, um Fehler bei der Übertragung erkennen zu können. Die Bitfehlerrate bzw. Bitfehlerhäufigkeit (= Anzahl der Bitfehler pro Zeiteinheit) oder das Bitfehlerverhältnis (= Anzahl der Bitfehler im Verhältnis zur Anzahl der empfangenen Bits) kann in der Nachrichtentechnik üblicherweise für die Qualität einer Übertragung über einen Übertragungskanal abgeschätzt werden. Bei einer erhöhten Bitfehlerrate oder einen erhöhten Bitfehlerverhältnis kann auf eine Störung der Kommunikationsverbindung über den jeweiligen Übertragungskanal geschlossen werden. Ein Blockfehler liegt üblicherweise dann vor, wenn ein oder mehrere Bits in einem Block falsch sind. Die Blockfehlerrate wie auch das Blockfehlerverhältnis ist ebenfalls ein Maß für die Qualität der Datenübertragung und kann daher auch genutzt werden, um Empfangs- bzw. Kommunikationsstörungen zu erkennen.

Eine bevorzugte Weiterbildung des erfindungsgemäßen Verfahrens sieht vor, dass zusätzlich zu den zwei entgegengesetzt gerichteten, unidirektionalen Übertragungskanälen zwischen den zwei Übertragungseinheiten zwei weitere unidirektionale Übertragungskanäle vorgesehen werden. Diese zusätzlichen zwei unidirektionalen Übertragungskanäle können beispielsweise zusätzliche Signalisierungs- und/oder Datenübertragungsaufgaben von den Sendeeinheiten der zwei Übertragungseinheiten genutzt werden. Die zusätzlichen, zwei unidirektionalen Übertragungskanäle unterscheiden sich im Frequenzbereich von den beiden entgegengesetzt gerichteten, unidirektionalen Übertragungskanälen, sind allerdings ebenfalls entgegengesetzt gerichtet.

Dabei ist es vorteilhaft, wenn über die beiden zusätzlichen Übertragungskanäle z.B. nach einem Hochlaufen der zwei Übertragungseinheiten zumindest ein Statussignal der jeweiligen Übertragungseinheit übertragen wird. Die Sendeeinheiten der zwei Übertragungseinheiten werden erst nach Detektion des jeweiligen Statussignals der jeweils anderen Übertragungseinheit zum periodisch wiederholten Aussenden des jeweils ersten Synchronisationssignals z.B. von der jeweiligen Steuereinheit angewiesen. Damit kann der jeweils anderen Übertragungseinheit auf sehr einfache Weise ein Betriebszustand signalisiert werden. Von der jeweiligen Übertragungseinheit bzw. dem zugehörigen Sender wird erst nach Empfang des Statussignals der anderen Übertragungseinheit mit dem Aussenden des jeweils ersten Synchronisationssignals begonnen. In den jeweiligen Empfangseinheiten der zwei Übertragungseinheiten wird vor der Detektion des Statussignals damit das erste Synchronisationssignal nicht empfangen bzw. den jeweiligen Empfangseinheiten ist bekannt, dass kein Synchronisationssignal ausgesendet wird. Damit wird z.B. eine fälschliche Interpretation eines Rauschens oder eines Störsignals als Synchronisationssignal verringert.

Es ist vorteilhaft, wenn die Duplex-Verbindung als Vollduplex-Verbindung ausgeführt wird. Idealerweise kann die Duplex-Verbindung mittels eines Time Division Duplex-Verfahrens, eines Frequenz Division Duplex-Verfahrens, eines Code Division Duplex-Verfahrens oder eine Kombination von zumindest zwei dieser Duplex-Verfahren realisiert werden.

### Kurzbeschreibung der Zeichnung

Die Erfindung wird nachfolgend in beispielhafter Weise anhand der beigefügten Figuren erläutert. Es zeigen dabei:
Figur 1 einen schematischen und beispielhaften Aufbau eines Kommunikationssystems zur Durchführung des Verfahrens zum Aufbau einer Duplex-Verbindung mit zwei Übertragungseinheiten
Figur 2 beispielhaft einen zeitlichen Verlauf des erfindungsgemäßen Verfahrens zum Aufbau einer Duplex-Verbindung zwischen zwei Übertragungseinheiten
Figur 3 einen weiteren, beispielhaften zeitlichen Verlauf des erfindungsgemäßen Verfahrens zum Aufbau einer Duplex-Verbindung zwischen zwei Übertragungseinheiten
Figur 4 einen weiteren, beispielhaften Verlauf des erfindungsgemäßen Verfahren zum Aufbau einer Duplex-Verbindung zwischen zwei Übertragungseinheiten unter Nutzung von jeweils zwei Synchronisationssignalen für den Aufbau
Figur 5 beispielhaft einen zeitlichen Verlauf des erfindungsgemäßen Verfahrens zum Aufbau einer Duplex-Verbindung unter Verwendung von zwei, weiteren Übertragungskanälen für eine Signalübertragung

### Ausführung der Erfindung

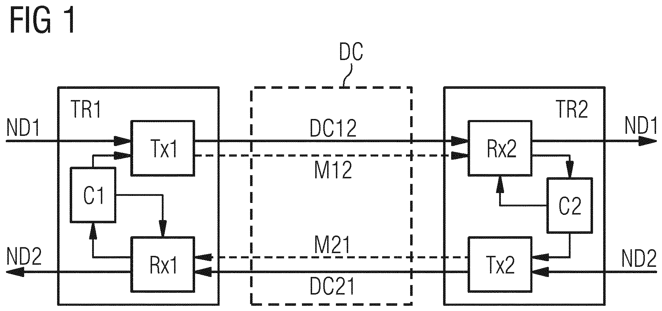

Figur 1 zeigt schematisch und beispielhaft ein Kommunikationssystem zur Durchführung des erfindungsgemäßen Verfahrens zum Aufbau einer Duplex-Verbindung zur Datenübertragung zwischen zwei Übertragungseinheiten TR1, TR2. Die Übertragungseinheiten TR1, TR2 sind über ein Übertragungsmedium wie z.B. eine Hochspannungsleitung, eine Mittelspannungsleitung, ein Kabel, eine Funkstrecke, etc. miteinander verbunden. Das Übertragungsmedium wird für eine Duplex-Verbindung DC genutzt. Die Duplex-Verbindung kann beispielsweise als Vollduplex-Verbindung ausgestaltet sein oder auf Basis von Time-Division-Duplexing (TDD), Frequency-Division-Duplexing (FFD), Code-Division-Duplexing (CDD) oder einer Kombination dieser Verfahren (z.B. TDD und FDD) realisiert werden.

Die Duplex-Verbindung weist zwei unidirektionale Übertragungskanäle DC12 und DC21 auf, welche entgegengesetzt gerichtet sind. Das bedeutet, über einen ersten Übertragungskanal DC12 wird eine erste Kommunikationsverbindung für eine Signal- und Datenübertragung von einer ersten Übertragungseinheit TR1 zu einer zweiten Übertragungseinheit TR2 aufgebaut und über einen zweiten Übertragungskanal DC21 wird eine zweite Kommunikationsverbindung für eine Signal- und Datenübertragung von der zweiten Übertragungseinheit TR2 zur ersten Übertragungseinheit TR1 aufgebaut. Optional können zwei weitere, unidirektionale Übertragungskanäle M12, M21 vorgesehen werden, welche sich im Frequenzbereich von den Übertragungskanälen DC12, DC21 unterscheiden. Die optionalen Übertragungskanäle M12, M21 können beispielsweise für zusätzliche Signalisierungs- und Datenübertragungsaufgaben (z.B. Übertragen von Statussignalen, etc.) verwendet werden.

Jede der zwei Übertragungseinheiten TR1, TR2 weist eine Sendeeinheit Tx1, Tx2 und eine Empfangseinheit Rx1, Rx2 auf. Während einer Datenübertragung - d.h. nach einer Synchronisationsphase - werden zu übertragende Nutzdaten ND1, ND2 in den jeweiligen Sendeeinheiten Tx1, Tx2 aufbereitet, kodiert und dann moduliert über die jeweiligen Übertragungskanäle DC12, DC21 zur jeweiligen Empfangseinheit Rx1, Rx2 übertragen. In der jeweiligen Empfangseinheit Rx1, Rx2 werden empfangene Daten demoduliert, dekodiert und als jeweilige Empfangsdaten ND1, ND2 auf der jeweiligen Empfängerseite ausgegeben. Beim in Figur 1 dargestellten Kommunikationssystem werden Nutzdaten ND1 von der Sendeeinheit Tx1 der ersten Übertragungseinheit TR1 über den ersten Übertragungskanal DC12 zur Empfangseinheit Rx2 der zweiten Übertragungseinheit TR2 und Nutzdaten ND2 von der Sendeeinheit Tx2 der zweiten Übertragungseinheit TR2 über den zweiten Übertragungskanal DC12 zur Empfangseinheit Rx1 der ersten Übertragungseinheit TR1 übertragen.

Falls weitere, zwei Übertragungskanäle M12, M21 vorgesehen sind, so können optional die Sendeeinheiten Tx1, Tx2 zusätzlich - z.B. modulierte - Signale über diese weiteren, zwei unidirektionalen Übertragungskanäle M12, M21 ausgesendet werden.

Weiterhin kann jede der zwei Übertragungseinheiten TR1, TR2 eine Steuereinheit C1, C2 umfassen. Von den Steuereinheiten C1, C2 kann beispielsweise eine ordnungsgemäße Datenübertragung über die Duplex-Verbindung DC überwacht werden. Weiterhin kann durch die jeweilige Steuereinheit C1, C2 die Synchronisationsphase initiiert werden - beispielsweise bei einem Start bzw. nach einem Hochfahren der Übertragungseinheiten TR1, TR2 oder nach einer Kommunikationsstörung und/oder Unterbrechung der Datenübertragung.

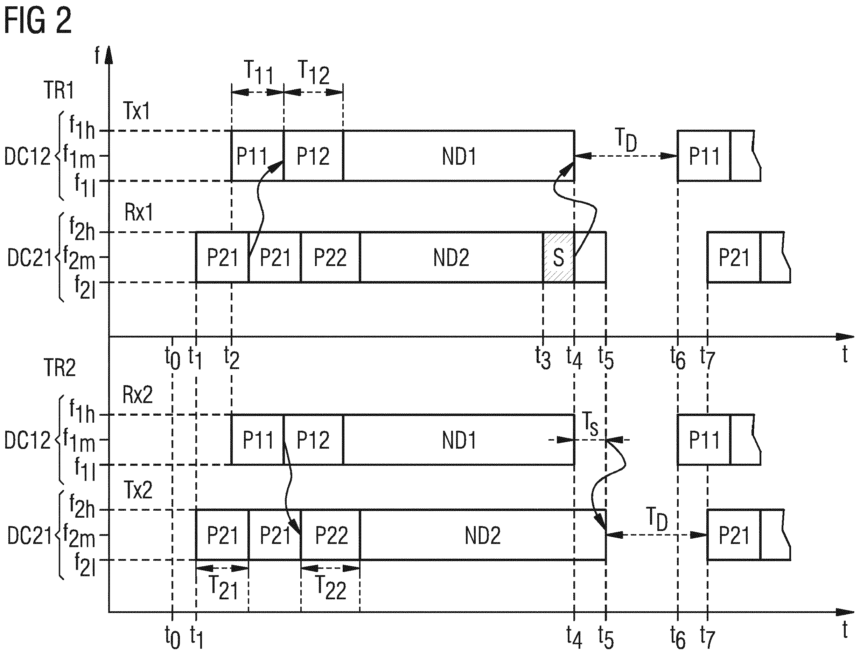

Figur 2 zeigt einen beispielhaften, zeitlichen Verlauf des erfindungsgemäßen Verfahrens zum Aufbau einer Duplex-Verbindung DC, wobei die von den Sendeeinheiten Tx1, Tx2 ausgesendeten bzw. die von dem Empfangseinheiten Rx1, Rx2 empfangenen Signale in einer Zeit-Frequenzdarstellung dargestellt sind. Auf einer waagrechten Achse ist die Zeit t aufgetragen. Auf einer senkrechten Achse ist die Frequenz f aufgetragen, wobei auf der Frequenzachse f in einem oberen Teil die erste Übertragungseinheit TR1 mit dem ersten Sender Tx1 und dem ersten Empfänger Rx1 bzw. die Signale am Ausgang der ersten Sendeeinheit Tx1 und die Signale am Eingang der ersten Empfangseinheit Rx1 aufgetragen sind. Im unteren Teil ist die zweite Übertragungseinheit TR2 mit dem zweiten Empfänger Rx2 und dem zweiten Sender Tx2 bzw. die Signale am Eingang der zweiten Empfangseinheit Rx2 und die Signale am Ausgang der zweiten Sendeeinheit Tx2 dargestellt.

Vom ersten Sender wird zum Aussenden von Signalen der erste Übertragungskanal DC12 verwendet, welcher durch eine obere Grenzfrequenz f₁ₕ und durch eine untere Grenzfrequenz f₁ₗ begrenzt ist und eine Mittelfrequenz f₁ₘ aufweist. Über den ersten Übertragungskanal DC12 werden von der Sendeeinheit Tx1 Signale und Daten an die zweite Empfangseinheit Rx2 gesendet. Im unteren Teil ist daher auf der Frequenzachse f nochmals der erste Übertragungskanal DC12 mit der unteren Grenzfrequenz f₁ₗ, der oberen Grenzfrequenz f₁ₕ und der Mittelfrequenz f₁ₘ aufgetragen.

Von der zweiten Sendeeinheit Tx2 wird für eine Signal- und Datenübertragung zur ersten Empfangseinheit Rx1 der zweite Übertragungskanal DC21 genutzt. Der zweite Übertragungskanal DC21 ist daher im unteren Teil von Figur 2 auf der Frequenzachse dargestellt, wobei eine obere Grenzfrequenz f₂ₕ und eine Grenzfrequenz f₂ₗ sowie ein Mittelfrequenz fₘ₂ des zweiten Übertragungskanals DC21 auf der Frequenzachse f dargestellt sind. Über den zweiten Übertragungskanal DC21 werden Signale und Daten an die erste Empfangseinheit Rx1 übertragen. Im unteren Bereich des oberen Teils bzw. der Darstellung der ersten Übertragungseinheit TR1 in der Figur 2 sind daher auf der Frequenzachse f nochmals die obere Grenzfrequenz f₂ₕ, die untere Grenzfrequenz f₂ₗ sowie die Mittelfrequenz fₘ₂ des zweiten Übertragungskanals DC21 eingetragen.

Nach einem Einschalten der zwei Übertragungseinheiten TR1, TR2 zu einem Zeitpunkt t₀ wird beispielsweise von der Sendeeinheit Tx2 der zweiten Übertragungseinheit TR2 zu einem Zeitpunkt t₁ mit dem Aussenden eines ersten Synchronisationssignals P21 begonnen, welches eine Wiederholungperiode T₂₁ aufweist. Zu einem Zeitpunkt t₂ wird auch von der Sendeeinheit Tx1 der ersten Übertragungseinheit TR1 - unabhängig von der Sendeeinheit Tx2 der zweiten Übertragungseinheit TR2 - mit dem Aussenden eines ersten Synchronisationssignals P11 mit einer Wiederholungsperiode T₁₁ begonnen.

Wird von der Empfangseinheit Rx1 der ersten Übertragungseinheit TR1 das erste Synchronisationssignal P21 des Senders Tx2 der zweiten Übertragungseinheit TR2 erfolgreich detektiert und erfolgt eine Synchronisation der Empfangseinheit Rx1 der ersten Übertragungseinheit TR1 mit dem ersten Synchronisationssignal P21 der Sendeeinheit Tx2 der zweiten Übertragungseinheit TR2, dann wird dies dem Steuerelement C1 der ersten Übertragungseinheit TR1 vom Empfänger Rx1 der ersten Übertragungseinheit TR1 signalisiert. Die Sendeeinheit Tx1 der ersten Übertragungseinheit TR1, von welcher mittlerweile periodisch wiederholt ihr erstes Synchronisationssignal P11 an die Empfangseinheit Rx2 der zweiten Übertragungseinheit TR2 ausgesendet wird, wird von der Steuereinheit C1 angewiesen, nach einem gegebenenfalls noch fertig auszusendenden ersten Synchronisationssignal P11 ein zweites Synchronisationssignal P12 zumindest einmalig auszusenden, um damit über die Empfangseinheit Rx2 der zweiten Übertragungseinheit TR2 die Steuereinheit C2 der zweiten Übertragungseinheit TR2 über den Synchronisationszustand der Empfangseinheit Rx1 der ersten Übertragungseinheit TR1 zu informieren.

Das zweite Synchronisationssignal P12 der ersten Übertragungseinheit wird beispielsweise durch Modulation der Wiederholungsperiode T11 des ersten Synchronisationssignals P11 aus dem ersten Synchronisationssignal P11 abgeleitet - z.B. durch Einfügen von Pausen. Das zweite Synchronisationssignal P12 weist dann beispielsweise eine Wiederholungsperiode T₁₂ auf, welche länger ist als die Wiederholungsperiode T₁₁ des ersten Synchronisationssignal P11. Alternativ kann das zweite Synchronisationssignal P12 der Sendeeinheit Tx1 der ersten Übertragungseinheit TR1 beispielsweise durch Modulation von Polarität und/oder Amplitude aus dem ersten Synchronisationssignal P11 abgeleitet werden.

Da bei der Sendeeinheit Tx2 der zweiten Übertragungseinheit TR2 nach dem erstmaligen Aussenden des ersten Synchronisationssignals P21 noch keine Information über den Synchronisationszustand bzw. eine erfolgte Synchronisation des Empfangseinheit Rx2 der zweiten Übertragungseinheit TR2 vorgelegen ist, wird vom Sender Tx2 der zweiten Übertragungseinheit TR2 mit der wiederholten Aussendung des ersten Synchronisationssignals P21 begonnen. Erfolgte eine erfolgreiche Detektion und Synchronisation der Empfangseinheit Rx2 der zweiten Übertragungseinheit TR2 mit dem ersten Synchronisationssignal P11 des Senders Tx1 der ersten Übertragungseinheit TR1, so wird dies der Steuereinheit C2 der zweiten Übertragungseinheit TR2 von der Empfangseinheit Rx2 der zweiten Übertragungseinheit TR2 signalisiert. Die Sendeeinheit Tx2 der zweiten Übertragungseinheit TR2 wird dann von der zugehörigen Steuereinheit C2 angewiesen, als nächstes ein zweites Synchronisationssignal P22 zu übertragen.

Das zweite Synchronisationssignal P22 der Sendeeinheit Tx2 der zweiten Übertragungseinheit TR2 kann ebenfalls aus dem ersten Synchronisationssignal P21 der Sendeeinheit Tx2 der zweiten Übertragungseinheit TR2 z.B. mittels Modulation der Wiederholungperiode T₁₂ abgeleitet. Es weist dann z.B. eine längere Wiederholungsperiode T₂₂ auf. Alternativ kann das zweite Synchronisationssignal P22 der Sendeeinheit Tx2 der zweiten Übertragungseinheit TR2 ebenfalls z.B. durch Modulation von Polarität und/oder Amplitude aus dem ersten Synchronisationssignal P12 abgeleitet werden.

Mit der wechselweisen, zumindest einmaligen Übertragung des jeweils zweiten Synchronisationssignals P12, P22 durch die Sendeeinheiten Tx1, Tx2 nach vorherigem Aussenden des jeweils ersten Synchronisationssignals P11, P21 haben sich die zwei Übertragungseinheiten TR1, TR2 über die erfolgreiche Detektion und Synchronisation des jeweils ersten Synchronisationssignals P11, P21 durch die jeweiligen Empfangseinheiten Rx1, Rx2 informiert. Nach einer erfolgreichen Detektion des jeweils zweiten Synchronisationssignals P12, P22 in den jeweiligen Empfangseinheiten Rx1, Rx2 wird dann eine Umstellung von der Synchronisationsphase auf eine Datenübertragung durchgeführt. Dazu werden beispielsweise die jeweiligen Empfangseinheiten Rx1, Rx2 von den jeweiligen Steuereinheiten C1, C2 angewiesen, auf einen synchronisierten Empfang von Nutzdaten ND1, ND2 umzustellen. Parallel dazu werden die jeweiligen Sendeeinheiten Tx1, Tx2 der beiden Übertragungseinheiten TR1, TR2 von den jeweiligen Steuereinheiten C1, C2 angewiesen, mit dem Aussenden der Nutzdaten ND1, ND2 zu beginnen. Dabei können beispielsweise zuerst optionale Startsequenzen und dann Nutzdatenblöcke übertragen werden.

In Figur 2 ist weiterhin beispielhaft eine Empfangs- oder Kommunikationsstörung S in einem der Übertragungskanäle DC12, DC21 - beispielsweise im zweiten Übertragungskanal DC21 - dargestellt. Die Empfangsstörung S wird vom Empfänger Rx1 der ersten Übertragungseinheit TR1 zu einem Zeitpunkt t₃ detektiert. Die Empfangsstörung kann beispielsweise mittels einer Metrik für eine Empfangssignalqualität - wie z.B. mittels zyklischer Redundanzprüfung oder anhand einer erhöhten Bit- und/oder Blockfehlerrate oder eines erhöhten Bitfehlerverhältnisses und/oder Blockfehlerverhältnisses - in der Empfangseinheit Rx1 der ersten Übertragungseinheit TR1 festgestellt werden.

Nach einer ausreichend langen Störungsdauer wird die Empfangs- bzw. Kommunikationsstörung in der Empfangseinheit Rx1 der ersten Übertragungseinheit TR1 von der Steuereinheit C1 der ersten Übertragungseinheit TR1 als Synchronisationsverlust interpretiert. Über die Steuereinheit C1 wird dann zu einem Zeitpunkt t₄ die Übertragung der Nutzdaten durch die Sendeeinheit Tx1 der ersten Übertragungseinheit TR1 gestoppt. Nach einer vorgebbaren Übertragungspause T_{D} wird dann beispielsweise durch Anweisung der Steuereinheit C1 zu einem Zeitpunkt t₆ die Synchronisationsphase gestartet. Dazu wird zum Zeitpunkt t₆ durch die Sendeeinheit Tx1 der ersten Übertragungseinheit TR1 wieder begonnen, das erste Synchronisationssignal P11 wiederholt auszusenden.

In der zweiten Übertragungseinheit TR2 wird nach einer Dauer T_{S} in der zugehörigen Empfangseinheit Rx2 die Unterbrechung der Nutzdatenübertragung detektiert und der zugehörigen Steuereinheit C2 signalisiert. Die Sendeeinheit Tx2 der zweiten Übertragungseinheit TR2 wird daraufhin von der Steuereinheit C2 angewiesen, ebenfalls die Nutzdatenübertragung zu stoppen. Nach einer Pause T_{D} wird auch in der zweiten Übertragungseinheit TR2 zu einem Zeitpunkt t₇ wieder die Synchronisationsphase gestartet. Zum Zeitpunkt t₇ wird von der Sendeeinheit Tx2 der zweiten Übertragungseinheit TR2 mit dem periodisch wiederholten Aussenden des ersten Synchronisationssignals P21 begonnen. Damit wurden beide Kommunikationsverbindungen bzw. beide unidirektionalen Übertragungskanäle DC12, DC21 wieder in eine erneute Synchronisationsphase versetzt.

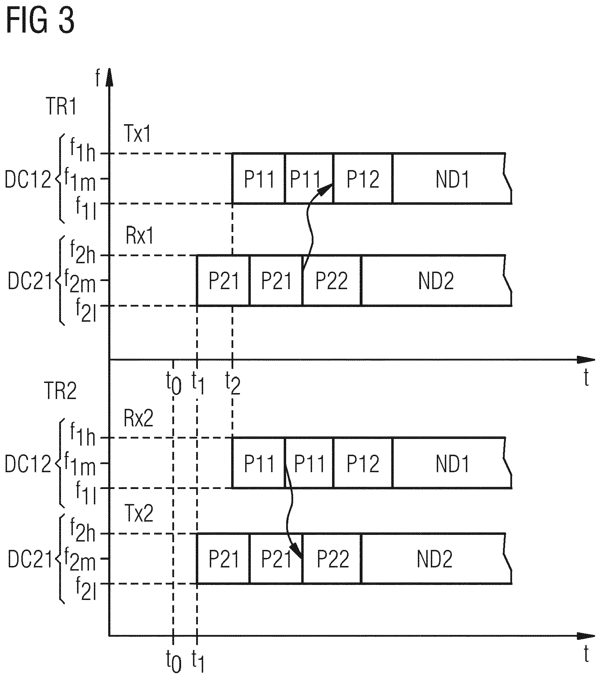

Figur 3 zeigt einen weiteren, beispielhaften zeitlichen Ablauf des erfindungsgemäßen Verfahrens zum Aufbau einer Duplex-Verbindung DC zwischen zwei Übertragungseinheiten TR1, TR2. Dabei sind - wie in Figur 2 - wieder die von den Sendeeinheiten Tx1, Tx2 ausgesendeten bzw. die von den Empfangseinheiten Rx1, Rx2 empfangenen Signale in einer Zeit-Frequenzdarstellung dargestellt. Im oberen Teil der Frequenz-Zeit-Darstellung sind wieder die erste Übertragungseinheit TR1 bzw. die Signale am Ausgang der Sendeeinheit Tx1 der ersten Übertragungseinheit TR1, welche über ersten Übertragungskanal DC12 an die zweite Übertragungseinheit TR2 gesendet werden, und die Signale am Eingang der Empfangseinheit Rx1 der ersten Übertragungseinheit TR1, welche über den zweiten Übertragungskanal DC21 von der zweiten Übertragungseinheit TR2 empfangen werden. Im unteren Teil des Frequenz-ZeitDiagramms sind wieder die zweite Übertragungseinheit TR2 bzw. die Signale am Eingang der Empfangseinheit Rx2 der zweiten Übertragungseinheit TR2, welche über den ersten Übertragungskanal DC12 empfangen werden, und die Signale am Ausgang der Sendeeinheit Tx2 der zweiten Übertragungseinheit TR2, welche über den zweiten Übertragungskanal DC21 an die erste Übertragungseinheit TR1 gesendet werden.

Die beiden Übertragungseinheiten TR1, TR2 werden wieder zu einem Zeitpunkt t₀ eingeschaltet. Von den Sendeeinheiten Tx1, Tx2 wird zu den jeweiligen Zeitpunkten t₁, t₂ wieder unabhängig voneinander mit dem Aussenden des jeweils ersten Synchronisationssignals P11, P21 begonnen. Im Gegensatz zu dem in Figur 2 beispielhaft dargestellten Ablauf des erfindungsgemäßen Verfahrens wird beispielsweise das erste von der Sendeeinheit Tx2 der zweiten Übertragungseinheit TR2 erste Synchronisationssignal P21 im Empfänger Rx1 der ersten Übertragungseinheit TR1 nicht detektiert - z.B. aufgrund einer kurzzeitigen Störung. Vom Sender Tx2 der zweiten Übertragungseinheit TR2 wird daher das erste Synchronisationssignal P21 nochmals ausgesendet. Wird dieses erste Synchronisationssignal P21 von der Empfangseinheit Rx1 der ersten Übertragungseinheit TR1 nun detektiert und kann sich die Empfangseinheit Rx1 der ersten Übertragungseinheit TR1 mit dem wiederholt gesendeten, ersten Synchronisationssignal P21 des Senders Tx2 synchronisieren, so wird das der Steuereinheit C1 der ersten Übertragungseinheit TR1 signalisiert.

Die Sendeeinheit Tx1 der ersten Übertragungseinheit TR1, welcher bereits zum Zeitpunkt t₂ mit dem Aussenden ihres ersten Synchronisationssignals P11 für die Synchronisation des Empfängers Rx2 der zweiten Übertragungseinheit TR2 begonnen hat, wird daraufhin von der Steuereinheit C1 angewiesen, nach dem gerade ausgesendeten ersten Synchronisationssignal P11 mit der Aussendung des zweiten Synchronisationssignals P12 zu beginnen. Der zweiten Übertragungseinheit TR2 wird damit über ihre Empfangseinheit Rx2 die erfolgreiche Synchronisation der Empfangseinheit Rx1 der ersten Übertragungseinheit TR1 mitgeteilt. Parallel dazu wurde - wie bereits bei Figur 2 beschrieben - von der Empfangseinheit Rx2 der zweiten Übertragungseinheit TR2 das wiederholt ausgesendete erste Synchronisationssignal P11 detektiert und ein Synchronisation erzielt bzw. der Steuereinheit C2 der zweiten Übertragungseinheit TR2 signalisiert. Durch die Steuereinheit C2 wurde auch die Sendeeinheit Tx2 der zweiten Übertragungseinheit TR2 angewiesen, das zweite Synchronisationssignal P22 auszusenden.

Nachdem wieder von beiden Sendeeinheiten Tx1, Tx2 der zwei Übertragungseinheiten TR1, TR2 das jeweils zweite Synchronisationssignal P12, P22 ausgesendet und von den jeweiligen Empfangseinheiten Rx1, Rx2 detektiert wurde, wird dann initiiert durch die jeweilige Steuereinheit C1, C2 wieder auf die Übertragung der jeweiligen Nutzdaten ND1, ND2 umgestellt, wobei im in Figur 3 dargestellten Beispiel die Übertragung der Nutzdaten ND1 über den ersten Übertragungskanal DC12 durch die Sendeeinheit Tx1 der ersten Übertragungseinheit TR1 um zumindest eine Wiederholungsperiode T₁₁ des jeweiligen ersten Synchronisationssignals P11 zeitlich verzögert ist.

Bei einer Empfangs- bzw. Kommunikationsstörung in einem der beiden Übertragungskanäle DC12, DC21 kann auch bei dem in Figur 3 beispielhaft dargestellten Verfahrensverlauf - wie bei Figur 2 beschrieben - die Synchronisationsphase erneut gestartet werden.

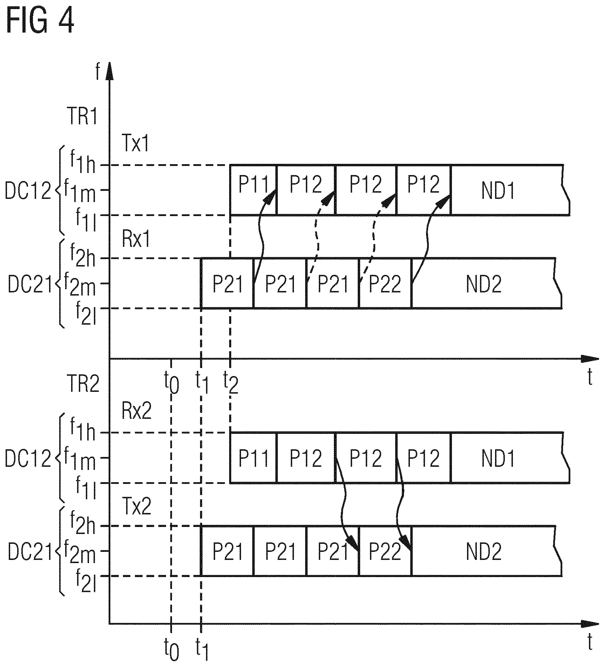

Figur 4 beschreibt beispielhaft einen weiteren Ablauf des erfindungsgemäßen Verfahrens, wobei in Figur 4 beispielsweise neben dem jeweils ersten Synchronisationssignal P11, P21 auch das jeweils zweite Synchronisationssignal P12, P22 für den Aufbau der Duplex-Verbindung DC bzw. für eine Synchronisation der jeweiligen Empfangseinheiten Rx1, Rx2 genutzt wird.

Figur 4 zeigt wieder den beispielhaften Ablauf des Verfahrens in Form einer Frequenz-Zeit-Darstellung mit dem Signalverlauf am Ausgang der Sendeeinheit Tx1 der ersten Übertragungseinheit TR1 und dem Signalverlauf am Eingang der Empfangseinheit Rx1 der ersten Übertragungseinheit TR1 im oberen Teil des Diagramms und mit dem Signalverlauf am Eingang der Empfangseinheit Rx2 der zweiten Übertragungseinheit TR2 und dem Signalverlauf am Ausgang der Sendeeinheit Tx2 der zweiten Übertragungseinheit TR2 im unteren Teil des Frequenz-ZeitDiagramms.

Nach dem Einschalten der beiden Übertragungseinheiten TR1, TR2 zum Zeitpunkt t₀ wird von den beiden Sendeeinheiten Tx1, Tx2 der zwei Übertragungseinheiten TR1, TR2 wieder unabhängig voneinander mit der Aussendung des jeweils ersten Synchronisationssignals P11, P21 zu den Zeitpunkten t₁, t₂ über den jeweiligen Übertragungskanal DC12, DC21 begonnen. Das erste Synchronisationssignal P21 der Sendeeinheit Tx2 der zweiten Übertragungseinheit TR2 wird von der Empfangseinheit Rx1 der ersten Übertragungseinheit TR1 sehr rasch - z.B. nach einmaligen Aussenden - detektiert. Die erfolgreiche Detektion und Synchronisation mit dem ersten Synchronisationssignal P21 der Sendeeinheit Tx2 der zweiten Übertragungseinheit TR2 wird von der Empfangseinheit Rx1 der ersten Übertragungseinheit TR1 wieder der zugehörigen Steuereinheit C1 signalisiert. In der Folge wird die Sendeeinheit Tx1 der ersten Übertragungseinheit TR1, von welcher ebenfalls seit dem Zeitpunkt t₂ ihr erstes Synchronisationssignal P11 ausgesendet wird, angewiesen, mit dem Aussenden ihres zweiten Synchronisationssignals P12 zu beginnen.

Da allerdings nach dem zumindest einmaligen Aussenden des ersten Synchronisationssignals P11 durch die Sendeeinheit Tx1 der ersten Übertragungseinheit TR1 noch keine Information über einen Synchronisationszustand der Empfangseinheit Rx2 der zweiten Übertragungseinheit TR2 vorlag, wird von der Sendeeinheit Tx2 der zweiten Übertragungseinheit TR2 weiterhin das jeweilige erste Synchronisationssignal (periodisch wiederholt) ausgesendet - da z.B. die Empfangseinheit Rx2 der zweiten Übertragungseinheit TR2 aufgrund einer kurzzeitigen Empfangsstörung das erste Synchronisationssignal P11 des Senders Tx1 der ersten Übertragungseinheit TR1 nicht detektieren konnte.

Von der Sendeeinheit Tx1 der ersten Übertragungseinheit TR1 wurde mittlerweile - da von der zugehörigen Empfangseinheit Rx1 bereits die Synchronisation signalisiert wurde - auf die Aussendung des zweiten Synchronisationssignals P12 umgestellt. In der Empfangseinheit Rx2 der zweiten Übertragungseinheit TR2 wird nun das zweite Synchronisationssignal P12 der Sendeeinheit Tx1 der ersten Übertragungseinheit TR1 für die Detektion und Synchronisation genutzt. So wird beispielsweise das einmalig ausgesendete zweite Synchronisationssignal P12 der Sendeeinheit Tx1 der ersten Übertragungseinheit TR1 von der Empfangseinheit Rx2 der zweiten Übertragungseinheit TR2 detektiert. Von der Empfangseinheit Rx2 der zweiten Übertragungseinheit TR2 wird der zugehörigen Steuereinheit C2 die erfolgreiche Detektion und Synchronisation signalisiert. In Folge wird die Sendeeinheit Tx2 der zweiten Übertragungseinheit TR2 von der zugehörigen Steuereinheit C2 angewiesen, das jeweilige zweite Synchronisationssignal P22 auszusenden.

Das wiederholt von der Sendeeinheit Tx2 der zweiten Übertragungseinheit TR2 ausgesendete, erste Synchronisationssignal wird von der Empfangseinheit Rx1 der ersten Übertragungseinheit TR1 zwar empfangen, aber von der zugehörigen Steuereinheit C1 nur als Information über die in der Empfangseinheit Rx2 der zweiten Übertragungseinheit TR2 noch nicht erfolgte Synchronisation interpretiert. Die Sendeeinheit Tx1 der ersten Übertragungseinheit TR1 wird daher von der zugehörigen Steuereinheit C1 angewiesen, weiterhin ihr zweites Synchronisationssignal P12 auszusenden.

Erst nach einem erfolgreichen Empfang des vom Sender Tx2 der zweiten Übertragungseinheit TR2 ausgesendeten, zweiten Synchronisationssignals P22 durch die Empfangseinheit Rx1 der ersten Übertragungseinheit TR1 wird die Sendeeinheit Tx1 der ersten Übertragungseinheit TR1 von der zugehörigen Steuereinheit C1 angewiesen, mit der Übertragung der Nutzdaten ND1, insbesondere mit einer Startsequenz der Nutzdatenübertragung, zu beginnen.

Analog wird nach der erfolgreichen, erstmaligen Detektion des zweiten Synchronisationssignals P12 der Sendeeinheit Tx1 der ersten Übertragungseinheit TR1 durch die Empfangseinheit Rx2 der zweiten Übertragungseinheit TR2 und der folgenden Synchronisation der Empfangseinheit Rx2 der zweiten Übertragungseinheit TR2 auch die Sendeeinheit Tx2 der zweiten Übertragungseinheit TR2 von der zugehörigen Steuereinheit C2 angewiesen, auf die Übertragung der Nutzdaten ND2, insbesondere auf Übertragung einer Startsequenz für die Nutzdatenübertragung zu beginnen.

Das bedeutet, von der jeweiligen Übertragungseinheit TR1, TR2 wird eine reguläre Datenübertragung nur dann gestartet, wenn von jeder der beiden Übertragungseinheiten TR1, TR2 zumindest einmal das jeweils zweite Synchronisationssignal P12, P22 über die jeweilige Empfangseinheit Rx1, Rx2 empfangen bzw. detektiert worden ist, und in der Folge über die jeweilige Sendeeinheit Tx1, Tx2 zumindest einmal ausgesendet worden ist. Anderenfalls wird von den beiden Übertragungseinheiten TR1, TR2 weiterhin die Synchronisationsphase beibehalten.

Bei einer möglicherweise auftretenden Empfangs- bzw. Kommunikationsstörung in einem der Übertragungskanäle DC12, DC21 erfolgt ein erneuter Start der Synchronisationsphase bei dem in Figur 4 beispielhaft dargestellten Ablauf des erfindungsgemäßen Verfahrens ebenfalls wie in Figur 2 dargestellt bzw. beschrieben.

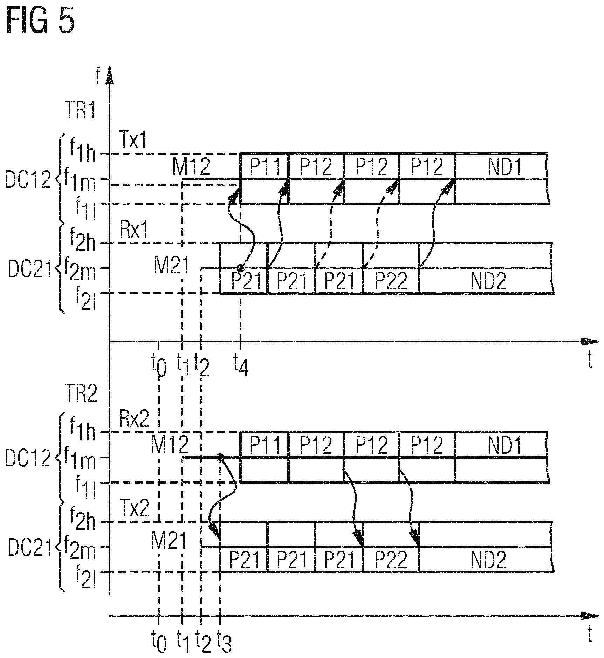

Figur 5 zeigt wiederum den bereits anhand von Figur 4 beschriebenen, beispielhaften Verlauf des erfindungsgemäßen Verfahrens allerdings werden zwei weitere, unidirektionale Übertragungskanäle M12, M21 für einen zusätzliche Signalisierung z.B. von Statusinformationen über die jeweilige Übertragungseinheit TR1, TR2 genutzt, welche neben den zwei entgegengesetzt gerichteten, unidirektionalen Übertragungskanälen DC12, DC21 vorgesehen sein können. Wie in Figur 5 beispielhaft dargestellt, unterscheiden sich die beiden, zusätzlichen Übertragungskanäle M12, M21 von den zwei entgegengesetzt gerichteten, unidirektionalen Übertragungskanälen DC12, DC21 im Frequenzbereich. Von den zwei entgegengesetzt gerichteten, unidirektionalen Übertragungskanälen DC12, DC21 wird beispielsweise ein Frequenzbereich zwischen der jeweiligen oberen Grenzfrequenz f₁ₕ, f₂ₕ und der jeweiligen unteren Grenzfrequenz f₁ₗ, f₂ₗ belegt. Von den beiden zusätzlichen, unidirektionalen Übertragungskanälen M12, M21 wird beispielweise ein Frequenzbereich um die jeweilige Mittelfrequenz fₘ₁, fₘ₂ des jeweiligen entgegengesetzt gerichteten, unidirektionalen Übertragungskanals DC12, DC21 belegt.

In Figur 5 ist - wie bereits in den Figuren 2, 3 und 4 - wieder ein beispielhafter Ablauf des Verfahrens in Form einer Frequenz-Zeit-Darstellung dargestellt. Im oberen Teil sind der Signalverlauf am Ausgang der Sendeeinheit Tx1 der ersten Übertragungseinheit TR1 und der Signalverlauf am Eingang der Empfangseinheit Rx1 der ersten Übertragungseinheit TR1 und im unteren Teil sind der Signalverlauf am Eingang der Empfangseinheit Rx2 der zweiten Übertragungseinheit TR2 und der Signalverlauf am Ausgang der Sendeeinheit Tx2 der zweiten Übertragungseinheit TR2 gezeigt. Dabei ist zusätzlich beim Signalverlauf am Ausgang der Sendeeinheit Tx1 der ersten Übertragungseinheit TR1 und am Eingang der Empfangseinheit Rx2 der zweiten Übertragungseinheit TR2 ein erster zusätzlicher unidirektionaler Übertragungskanal M12 dargestellt. Beim Signalverlauf am Eingang der Empfangseinheit Rx1 der ersten Übertragungseinheit TR1 und beim Signalverlauf am Ausgang der Sendeeinheit Tx2 der zweiten Übertragungseinheit TR2 ist ein zweiter zusätzlicher, unidirektionaler Übertragungskanal M21 dargestellt.

Nach dem Einschalten der beiden Übertragungseinheiten TR1, TR2 zum Zeitpunkt t₀ wird von den jeweiligen Sendeeinheiten Tx1, Tx2 der beiden Übertragungseinheiten TR1, TR2 mit dem Aussenden von Signalen, beispielsweise Statussignalen betreffend den jeweiligen Zustand/Status der jeweiligen Übertragungseinheit TR1, TR2, über die zwei zusätzlichen, unidirektionalen Übertragungskanäle M12, M21 begonnen. Von der Sendeeinheit Tx1 der ersten Übertragungseinheit TR1 wird z.B. zum Zeitpunkt t₁ mit dem Senden eines Statussignals über den aktuellen Status der ersten Übertragungseinheit TR1 (z.B. eingeschaltet, bereit zum Senden bzw. Empfangen, etc.) über den ersten zusätzlichen, unidirektionalen Übertragungskanal M12 begonnen. Von der Sendeeinheit Tx2 der zweiten Übertragungseinheit TR2 wird zum Zeitpunkt t₂ das Aussenden eines Statussignals über den aktuellen Status der zweiten Übertragungseinheit TR2 (z.B. eingeschaltet, bereit zum Senden bzw. Empfangen, etc.) über den zweiten zusätzlichen, unidirektionalen Übertragungskanal M21 gestartet.

Das jeweils über die zusätzlichen, unidirektionalen Übertragungskanäle M12, M21 ausgesendete Statussignal kann von den jeweiligen Empfangseinheiten Rx1, Rx2 der beiden Übertragungseinheiten TR1, TR2 detektiert werden. So wird beispielsweise das über den ersten zusätzlichen, unidirektionalen Übertragungskanal M12 von Sender Tx1 der ersten Übertragungseinheit TR1 ausgesendete Statussignal zu einem Zeitpunkt t₃ vom Empfänger Rx2 detektiert. Das andere Statussignal, welches über den zweiten zusätzlichen, unidirektionalen Übertragungskanal M21 vom Sender Tx2 der zweiten Übertragungseinheit TR2 ausgesendet wird, wird zu einem Zeitpunkt t₄ im Empfänger Rx1 der ersten Übertragungseinheit detektiert.

Nach der Detektion des jeweiligen Statussignals in der jeweiligen Empfangseinheit Rx1, Rx2 werden die jeweiligen Sendeeinheiten Tx1, Tx2 von den jeweils zugehörigen Steuereinheiten C1, C2 angewiesen, mit dem Aussenden des jeweils ersten Synchronisationssignals P11, P21 mit der jeweils entsprechenden Wiederholungsperiode T₁₁, T₂₁ zu beginnen. Die Aussendung des jeweils ersten Synchronisationssignals P11, P21 erfolgt damit erst nach dem Aussenden der jeweiligen Statussignale in den zusätzlichen unidirektionalen Übertragungskanälen M12 und M21.

Das bedeutet - wie in Figur 5 beispielhaft dargestellt, dass von einer Sendeeinheit Tx1 der ersten Übertragungseinheit TR1 zum Zeitpunkt t₄ mit dem Aussenden des ersten Synchronisationssignals P11 begonnen wird, nachdem das Statussignal der zweiten Übertragungseinheit TR2 in der Empfangseinheit Rx1 der ersten Übertragungseinheit TR1 detektiert worden, das Statussignal in den zusätzlichen unidirektionalen Übertragungskanal M12 ausgesendet worden und eine entsprechend Anweisung durch die zugehörige Steuereinheit C1 erfolgt ist. Analog wird von der Sendeeinheit Tx2 der zweiten Übertragungseinheit TR2 zum Zeitpunkt t₃ mit dem Aussenden des ersten Synchronisationssignals P21 begonnen, nachdem das Statussignal der ersten Übertragungseinheit TR1 in der Empfangseinheit der zweiten Übertragungseinheit TR2 empfangen worden, das Statussignal im zusätzlichen unidirektionalen Übertragungskanal M21 ausgesendet worden und die entsprechende Anweisung durch die zugehörige Steuereinheit C2 erfolgt ist. Damit wird eine fälschliche Interpretation von z.B. Rauschen oder Störsignalen am jeweiligen Übertragungskanal DC12, DC21 als jeweils erstes Synchronisationssignal P11, P21 erheblich reduziert.

Weiterhin ist auch bei den in den Figuren 2 und 3 beispielhaft dargestellten Abläufen des erfindungsgemäßen Verfahrens eine Nutzung bzw. ein Einsatz der zusätzlichen, unidirektionalen Übertragungskanäle M12, M21 zum Aussenden von Signalen wie z.B. Statussignalen möglich. Die zusätzlichen beiden, unidirektionalen Übertragungskanäle M12, M21 können weiterhin beispielsweise für zusätzliche Signalisierungs- und Datenübertragungsaufgaben verwendet werden.

## Patentansprüche

1. Verfahren zum Aufbau einer Duplex-Verbindung (DC) zur Datenübertragung zwischen zwei Übertragungseinheiten (TR1, TR2) mit jeweils einer Sendereinheit (Txl, Tx2) und einer Empfangseinheit (Rxl, Rx2), wobei die Duplex-Verbindung (DC) zwei entgegengesetzt gerichtete, unidirektionale Übertragungskanäle (DC12, DC21) aufweist, über welche jeweils eine Kommunikationsverbindung zur Datenübertragung zwischen der jeweiligen Sendeeinheit (Txl, Tx2) und der jeweiligen Empfangseinheit (Rxl, Rx2) der zwei Übertragungseinheiten (TR1, TR2) aufgebaut wird, **dadurch gekennzeichnet, dass** während einer Synchronisationsphase unabhängig voneinander von den Sendeeinheiten (Txl, Tx2) der zwei Übertragungseinheiten (TR1, TR2) ein jeweils erstes Synchronisationssignal (P11, P21) periodisch wiederholt ausgesendet wird, dass nach einer Detektion und Synchronisation mit dem jeweiligen ersten Synchronisationssignal (P11, P21) durch die jeweilige Empfangseinheit (Rxl, Rx2) die jeweils zur selben Übertragungseinheit (TR1, TR2) gehörende Sendeeinheit (Txl, Tx2) angewiesen wird, zumindest einmalig ein jeweils zweites Synchronisationssignal (P12, P22) auszusenden, dass das jeweils zweite Synchronisationssignal (P12, P22) aus dem jeweils ersten Synchronisationssignal (P11, P21) der Sendeeinheit (Txl, Tx2) der jeweiligen Übertragungseinheit (TR1, TR2) durch Modulation einer jeweiligen Wiederholungsperiode (T11, T21) des ersten Synchronisationssignals (P11, P21), oder durch Veränderungen einer Amplitude des ersten Synchronisationssignals (P11, P21)und/oder einer Polarität des ersten Synchronisationssignals (P11, P21) abgeleitet wird, und dass nach zumindest einmaliger Detektion des jeweils zweiten Synchronisationssignals (P12, P22) durch die Empfangseinheiten (Rxl, Rx2) der zwei Übertragungseinheiten (TR1, TR2) eine Umstellung auf eine Datenübertragung durchgeführt wird.

2. Verfahren nach Anspruch 1, **dadurch gekennzeichnet, dass** in jeder der zwei Übertragungseinheiten (TR1, TR2) eine Steuereinheit (C1, C2) vorgesehen wird, durch welche die Datenübertragung überwacht und die Synchronisationsphase initiiert wird.

3. Verfahren nach Anspruch 2, **dadurch gekennzeichnet, dass** die Detektion und Synchronisation mit dem jeweils ersten Synchronisationssignal (P11, P21) von der jeweiligen Empfangseinheit (Rxl, Rx2) der zur selben Übertragungseinheit (TR1, TR2) gehörenden Steuereinheit (C1, C2) signalisiert wird, und dass von der zur selben Übertragungseinheit (TR1, TR2) gehörende Steuereinheit (C1, C2) die zur selben Übertragungseinheit (TR1, TR2) gehörende Sendeeinheit (Txl, Tx2) zum Aussenden des jeweils zweiten Synchronisationssignals (P12, P22) angewiesen wird.

4. Verfahren nach einem der Ansprüche 1 bis 3, **dadurch gekennzeichnet, dass** die Synchronisationsphase nach einem Starten der zwei Übertragungseinheiten (TR1, TR2) und/oder durch eine Empfangsstörung (S) während einer Datenübertragung initiiert wird.

5. Verfahren nach Anspruch 4, **dadurch gekennzeichnet, dass** die Empfangsstörung (S) in der jeweiligen Übertragungseinheit (TR1, TR2) mittels einer Metrik für eine Empfangssignalqualität, insbesondere mittels zyklischer Redundanzprüfung oder anhand einer erhöhten Bit- und/oder Blockfehlerrate oder anhand eines erhöhten Bit- und/oder Blockfehlerverhältnisses, festgestellt wird.

6. Verfahren nach einem der Ansprüche 1 bis 5, **dadurch gekennzeichnet, dass** zusätzlich zu den zwei entgegengesetzt gerichteten, unidirektionalen Übertragungskanälen (DC12, DC21) zwischen den zwei Übertragungseinheit (TR1, TR2) zwei weitere unidirektionale Übertragungskanäle (M12, M21) vorgesehen werden.

7. Verfahren nach Anspruch 6, **dadurch gekennzeichnet, dass** über die zwei weiteren Übertragungskanäle (M12, M21) zumindest ein Statussignal der jeweiligen Übertragungseinheit (TR1, TR2) übertragen wird, und dass die Sendeeinheiten (Txl, Tx2) der zwei Übertragungseinheit (TR1, TR2) zum periodisch wiederholten Aussenden des jeweils ersten Synchronisationssignals (P11, P12) nach Detektion des jeweiligen Statussignals der jeweils anderen Übertragungseinheiten (TR1, TR2) angewiesen werden.

8. Verfahren nach einem der vorangegangenen Ansprüche, **dadurch gekennzeichnet, dass** die Duplex-Verbindung (DC) als Vollduplex-Verbindung realisiert wird.

## Claims

1. Method for establishing a duplex connection (DC) for data transmission between two transmission units (TR1, TR2), each having a transmit unit (Txl, Tx2) and a receive unit (Rxl, Rx2), wherein the duplex connection (DC) has two opposingly directed, unidirectional transmission channels (DC12, DC21), by which a communications link for data transmission between the respective transmit unit (Txl, Tx2) and the respective receive unit (Rxl, Rx2) of the two transmission units (TR1, TR2) is established in each case, **characterised in that** during a synchronisation phase the transmit units (Txl, Tx2) of the two transmission units (TR1, TR2) independently emit in a periodically repeated manner a first synchronisation signal (P11, P21) respectively, **in that** following detection and synchronisation with the respective first synchronisation signal (P11, P21) by the respective receive unit (Rxl, Rx2), the transmit unit (Txl, Tx2) belonging to the same transmission unit (TR1, TR2) respectively is instructed to emit at least one time a second synchronisation signal (P12, P22) respectively, **in that** the second synchronisation signal (P12, P22) respectively is derived from the first synchronisation signal (P11, P21) respectively of the transmit unit (Txl, Tx2) of the respective transmission unit (TR1, TR2) by modulation of a respective repetition period (T11, T21) of the first synchronisation signal (P11, P21), or by changing an amplitude of the first synchronisation signal (P11, P21) and/or a polarity of the first synchronisation signal (P11, P21), and **in that** following at least one-time detection of the second synchronisation signal (P12, P22) respectively by the receive units (Rxl, Rx2) of the two transmission units (TR1, TR2), a changeover to data transmission is implemented.

2. Method according to claim 1, **characterised in that** a control unit (C1, C2) is provided in each of the two transmission units (TR1, TR2), by which unit the data transmission is monitored and the synchronisation phase initiated.

3. Method according to claim 2, **characterised in that** detection and synchronisation is signalled with the first synchronisation signal (P11, P21) respectively by the respective receive unit (Rxl, Rx2) to the control unit (C1, C2) belonging to the same transmission unit (TR1, TR2), and **in that** the transmit unit (Txl, Tx2) belonging to the same transmission unit (TR1, TR2) is instructed by the control unit (C1, C2) belonging to the same transmission unit (TR1, TR2) to emit the second synchronisation signal (P12, P22) respectively.

4. Method according to one of claims 1 to 3, **characterised in that** the synchronisation phase is initiated after starting of the two transmission units (TR1, TR2) and/or due to a reception disturbance (S) during data transmission.

5. Method according to claim 4, **characterised in that** the reception disturbance (S) is determined in the respective transmission unit (TR1, TR2) by means of a metric for received signal quality, in particular by means of cyclical redundancy checking or using an increased bit and/or block error rate or using an increased bit and/or block error ratio.

6. Method according to one of claims 1 to 5, **characterised in that** in addition to the two opposingly directed, unidirectional transmission channels (DC12, DC21), two further unidirectional transmission channels (M12, M21) are provided between the two transmission units (TR1, TR2).

7. Method according to claim 6, **characterised in that** at least one status signal of the respective transmission unit (TR1, TR2) is transmitted via the two further transmission channels (M12, M21), and **in that** the transmit units (Txl, Tx2) of the two transmission units (TR1, TR2) are instructed to periodically repeatedly emit the first synchronisation signal (P11, P12) respectively following detection of the respective status signal of the other transmission units (TR1, TR2) in each case.

8. Method according to one of the preceding claims, **characterised in that** the duplex connection (DC) is implemented as a full-duplex connection.

## Revendications

1. Procédé d'établissement d'une connexion duplex (DC) pour la transmission de données entre deux unités de transmission (TR1, TR2) avec respectivement une unité d'émission (Txl, Tx2) et une unité de réception (Rxl, Rx2), la connexion duplex (DC) comprenant deux canaux de transmission unidirectionnels de sens opposé (DC12, DC21) via lesquels s'établit une liaison de communication pour la transmission de données entre l'unité d'émission respective (Txl, Tx2) et l'unité de réception respective (Rxl, Rx2) des deux unités de transmission (TR1, TR2), **caractérisé en ce que**, pendant une phase de synchronisation, les unités d'émission (Txl, Tx2) des deux unités de transmission (TR1, TR2) émettent, indépendamment l'une de l'autre, un premier signal de synchronisation respectif (P11, P21) de manière répétée périodiquement, **en ce que**, après une détection et synchronisation avec le premier signal de synchronisation (P11, P21) respectif par l'unité de réception (Rxl, Rx2) respective, l'unité d'émission (Txl, Tx2) appartenant respectivement à la même unité de transmission (TR1, TR2) reçoit l'ordre d'émettre au moins une fois un deuxième signal de synchronisation respectif (P12, P22), **en ce que** le deuxième signal de synchronisation respectif (P12, P22) est dérivé du premier signal de synchronisation respectif (P11, P21) de l'unité d'émission (Txl, Tx2) de l'unité de transmission respective (TR1, TR2) par modulation d'une période de répétition respective (T11, T21) du premier signal de synchronisation (P11, P21) ou par modifications d'une amplitude du premier signal de synchronisation (P11, P21) et/ou d'une polarité du premier signal de synchronisation (P11, P21), et **en ce que**, après que le deuxième signal de synchronisation respectif (P12, P22) a été détecté au moins une fois par les unités de réception (Rxl, Rx2) des deux unités de transmission (TR1, TR2), il y a passage à une transmission de données.

2. Procédé selon la revendication 1, **caractérisé en ce qu'**est prévue, dans chacune des deux unités de transmission (TR1, TR2), une unité de commande (C1, C2) qui surveille la transmission de données et par laquelle est initiée la phase de synchronisation.

3. Procédé selon la revendication 2, **caractérisé en ce que** la détection et la synchronisation avec le premier signal de synchronisation respectif (P11, P21) sont signalées par l'unité de réception respective (Rxl, Rx2) à l'unité de commande (C1, C2) appartenant à la même unité de transmission (TR1, TR2) et **en ce que** l'unité de commande (C1, C2) appartenant à la même unité de transmission (TR1, TR2) ordonne à l'unité d'émission (Txl, Tx2) appartenant à la même unité de transmission (TR1, TR2) d'émettre le deuxième signal de synchronisation respectif (P12, P22).

4. Procédé selon l'une des revendications 1 à 3, **caractérisé en ce que** la phase de synchronisation est initiée après un démarrage des deux unités de transmission (TR1, TR2) et/ou une perturbation de réception (S) pendant une transmission de données.

5. Procédé selon la revendication 4, **caractérisé en ce que** la perturbation de réception (S) est constatée dans l'unité de transmission respective (TR1, TR2) au moyen d'une métrique pour une qualité de signal de réception, et plus particulièrement au moyen d'un contrôle de redondance cyclique ou à l'aide d'un taux d'erreur de bit et/ou de bloc augmenté ou à l'aide d'un rapport d'erreur de bit et/ou de bloc augmenté.

6. Procédé selon l'une des revendications 1 à 5, **caractérisé en ce que** sont prévus, en plus des deux canaux de transmission unidirectionnels de sens opposé (DC12, DC21), deux autres canaux de transmission unidirectionnels (M12, M21) entre les deux unités de transmission (TR1, TR2).

7. Procédé selon la revendication 6, **caractérisé en ce qu'**au moins un signal de statut de l'unité de transmission respective (TR1, TR2) est transmis sur les deux autres canaux de transmission (M12, M21) et **en ce que** les unités d'émission (Txl, Tx2) des deux unités de transmission (TR1, TR2) reçoivent l'ordre d'émettre de manière répétée périodiquement le premier signal de synchronisation respectif (P11, P12) après détection du signal de statut respectif des autres unités de transmission respectives (TR1, TR2).

8. Procédé selon l'une des revendications précédentes, **caractérisé en ce que** la connexion duplex (DC) est réalisée en tant que connexion duplex intégral.
